(19) Europäisches Patentamt
European Patent Office
Office européen des brevets

(11) **EP 3 594 279 A1**

(12) **EUROPEAN PATENT APPLICATION**
published in accordance with Art. 153(4) EPC

(43) Date of publication:
**15.01.2020 Bulletin 2020/03**

(21) Application number: **18764889.4**

(22) Date of filing: **05.03.2018**

(51) Int Cl.:
*C08J 9/28* (2006.01)    *B32B 5/18* (2006.01)
*B32B 27/32* (2006.01)    *C08L 23/02* (2006.01)
*H01M 2/16* (2006.01)

(86) International application number:
**PCT/JP2018/008332**

(87) International publication number:
**WO 2018/164054 (13.09.2018 Gazette 2018/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2017 JP 2017044208**

(71) Applicant: **Toray Industries, Inc.**
**Tokyo 103-8666 (JP)**

(72) Inventors:
• **NISHIMURA, Naoya**
**Otsu-shi**
**Shiga 520-8558 (JP)**
• **KANEDA, Toshihiko**
**Nasushiobara-shi**
**Tochigi 329-2763 (JP)**
• **CHEN, Yanzi**
**Nasushiobara-shi**
**Tochigi 329-2763 (JP)**

(74) Representative: **Mewburn Ellis LLP**
**City Tower**
**40 Basinghall Street**
**London EC2V 5DE (GB)**

(54) **POLYOLEFIN MICROPOROUS MEMBRANE**

(57)     The purpose of the present invention is to provide a polyolefin microporous membrane with excellent self-discharge characteristics when built into a secondary battery as a separator. This polyolefin microporous membrane has a haze value of less than or equal to 90%, measured in accordance with JIS K 7136, and a piercing strength of greater than or equal to 1.96 N.

EP 3 594 279 A1

**Description**

TECHNICAL FIELD

The present invention relates to a polyolefin microporous membrane.

BACKGROUND ART

Microporous membranes are used in various fields, for example, a filter such as a filtration membrane and a dialysis membrane, a separator for a battery, and a separator for an electrolytic condenser, and the like. Among these, a microporous membrane using polyolefin as a resin material has excellent chemical resistance, insulation, mechanical strength, and the like and the shutdown characteristics, and is therefore widely used as a separator for a secondary battery in recent years.

Secondary batteries, for example, lithium ion secondary batteries, are widely used as batteries used in personal computers, mobile phones, and the like because of their high energy density. The secondary batteries are also expected as a motor driving power source of an electric automobile or a hybrid automobile.

In recent years, since the energy density of the secondary battery increases, a microporous membrane used as a separator has been required to be thin. However, due to reduction in thickness of the separator, self-discharge of the battery may increase as membrane strength of the separator decreases, and improvement of the membrane strength and improvement of self-discharge characteristics are required.

Self-discharge refers to a phenomenon in which the same chemical reaction as that of discharge occurs in the battery via the separator in a non-use state, and battery voltage and capacity decrease. It is considered that the self-discharge occurs when a foreign substance compressively deforms the separator to reduce a distance between electrodes, or to generate a leakage current via the separator due to generation of dendrite accompanying use over a long period of time in a case where the minute foreign substance is generated in the battery, such as a burr of an electrode. The self-discharge characteristics tend to deteriorate because the distance between electrodes decreases as the thickness of the separator is reduced.

For example, Patent Literature 1 discloses a polyolefin microporous membrane in which self-discharge in a case of using a separator for a lithium ion secondary battery is prevented by setting a stretching speed in a stretching step after extracting a membrane forming solvent to a specific range in a method for forming the polyolefin microporous membrane by mixing a polyolefin resin and the membrane forming solvent.

On the other hand, several methods of evaluating the polyolefin microporous membrane by optical characteristics of the polyolefin microporous membrane have been disclosed. For example, Patent Literature 2 describes evaluation of dispersibility of polypropylene in a polyolefin microporous membrane by a haze value measured using ultraviolet light having a wavelength of 400 nm. Patent Literature 3 describes evaluation of permeability and mechanical strength of the polyolefin microporous membrane by total light transmittance.

CITATION LIST

PATENT LITERATURE

Patent Literature 1: JP 2014-162851 A
Patent Literature 2: WO 2006/137535 A1
Patent Literature 3: JP 2003-253026 A

SUMMARY OF INVENTION

TECHNICAL PROBLEM

Although the above Patent Literature 1 describes the polyolefin microporous membrane capable of preventing self-discharge, the polyolefin microporous membranes disclosed in Examples have a thickness of 20 $\mu$m or more, and in a case of thinning the membrane, further improvement of self-discharge characteristics is required. In addition, in the above Patent Literatures 2 and 3, there is no description regarding the relation with self-discharge characteristics at all.

In view of the above circumstances, an object of the present invention is to provide a polyolefin microporous membrane having high strength and excellent self-discharge characteristics even when the polyolefin microporous membrane is thinned, based on new ideas of focusing on relation between a haze value of the polyolefin microporous membrane and the self-discharge characteristics of the secondary battery including the polyolefin microporous membrane as a separator.

SOLUTION TO PROBLEM

The polyolefin microporous membrane in a first aspect of the present invention has a haze value measured in accordance with JIS K 7136 being 90% or less, and puncture strength of 1.96 N or more.
The polyolefin microporous membrane may have air permeability of 50 sec/100 cm$^3$ or more and 300 sec/100 cm$^3$ or less. The polyolefin microporous membrane may contain 50 weight% or more of a high-density polyethylene. The polyolefin microporous membrane may have a weight average molecular weight of 800,000 or more. The polyolefin microporous membrane may have a thickness of 1 $\mu$m or more and 20 $\mu$m or less.

ADVANTAGEOUS EFFECTS OF INVENTION

The polyolefin microporous membrane of the present invention has high strength and is excellent in self-discharge characteristics of a secondary battery including the polyolefin microporous membrane as a separator. In a method for producing the polyolefin microporous membrane of the present invention, the polyolefin microporous membrane having high strength and excellent self-discharge characteristics for a secondary battery including the polyolefin microporous membrane as a separator can be easily produced even when the polyolefin microporous membrane is thinned.

DESCRIPTION OF EMBODIMENTS

Hereinafter, embodiments of the present invention are described. However, the present invention is not limited to the embodiments to be described below.

1. Polyolefin microporous membrane

In the present description, the polyolefin microporous membrane refers to a microporous membrane containing polyolefin as a main component, for example, a microporous membrane containing 90 mass% or more of polyolefin based on a total amount of the microporous membrane. Physical properties of the polyolefin microporous membrane in the present embodiment are described below.

(Haze value)

The polyolefin microporous membrane in the present embodiment has a haze value measured in accordance with JIS K 7136 being 90% or less, preferably less than 90%, more preferably 89% or less, and even more preferably 88% or less. When the haze value of the polyolefin microporous membrane falls within the above range, self-discharge characteristics of a secondary battery using the polyolefin microporous membrane as a separator is improved. Since the polyolefin microporous membrane having a haze value falling within the above range has a fine and uniform pore structure microscopically, and has a uniform structure without defects such as voids macroscopically, it is assumed that self-discharge of the secondary battery is prevented by improving compression deformation resistance in the secondary battery or preventing dendrite generation. That is, the haze value can be used as an index for evaluating the fineness and uniformity of the pore structure of the polyolefin microporous membrane.
The lower limit of the haze value of the polyolefin microporous membrane in the present embodiment is not particularly limited, but the haze value is, for example, 70% or more, preferably 75% or more, and more preferably 80% or more. The haze value can be controlled to fall within the above range by, for example, incorporating an ultra-high molecular weight polyethylene and/or a crystal nucleating agent, or adjusting the weight average molecular weight and stretching magnification (in particular, a stretching magnification of a film after drying to be described below) of the polyolefin microporous membrane.
The haze value is a value measured in accordance with JIS K 7136: 2000, and is determined, for example, by measuring a test piece prepared by cutting the polyolefin microporous membrane to be measured off to a size of 3 cm × 3 cm through a haze meter using, for example, a white light source as a light source. The haze value is a value indicated by a percentage of transmitted light strayed 2.5° or more from incident light due to forward scattering among transmitted light passing through the test piece. Specifically, the haze value is determined based on the following formula (1).

$$\text{Haze} = [(\tau_4/\tau_2) - (\tau_3/\tau_1)] \times 100 \ldots (1)$$

In the above formula (1), $\tau_1$ denotes a flux of incident light, $\tau_2$ denotes a total light flux passing through the test piece, $\tau_3$ denotes a flux of light diffused by an apparatus, and $\tau_4$ denotes a flux of light diffused by the apparatus and the test piece. The haze value can be an average value of the obtained values through repeated measurement of three times or more.

(Puncture strength)

The puncture strength of the polyolefin microporous membrane is 1.96 N or more, preferably 2.00 N or more, more preferably 2.50 N or more, and even more preferably 2.70 N or more. The upper limit of the puncture strength is not particularly limited, but the puncture strength is, for example, 20.00 N or less. When the puncture strength falls within the above range, membrane strength of the polyolefin microporous membrane is excellent. In the secondary battery using the polyolefin microporous membrane as a separator, occurrence of a short circuit of electrodes and self-discharge are prevented. The puncture strength can be controlled to fall within the above range by, for example, incorporating an ultra-high molecular weight polyethylene and/or a crystal nucleating agent, or adjusting the weight average molecular weight (Mw) or stretching magnification (in particular, a stretching magnification of the film after drying to be described below) of a polyolefin resin configuring the polyolefin microporous membrane, in the manufacture of the polyolefin microporous membrane.

The polyolefin microporous membrane preferably has puncture strength of 1.96 N or more, and more preferably 2.00 N or more and 20.00 N or less, in terms of membrane thickness of 5 μm. When the puncture strength falls within the above range, the membrane strength is excellent even when the polyolefin microporous membrane is thinned, and occurrence of a short circuit of electrodes and self-discharge are prevented in the secondary battery using the polyolefin microporous membrane as a separator.

The puncture strength is a value obtained by measuring a maximum load (N) when the polyolefin microporous membrane having a thickness $T_1$ (μm) is punctured at a speed of 2 mm/sec with a needle having a diameter of 1 mm with a spherical tip (radius of curvature R: 0.5 mm). The puncture strength (N/5 μm) in terms of membrane thickness of 5 μm is a value that can be obtained by the following formula (2).

$$\text{Membrane thickness strength (in terms of 5 μm)} = \text{measured puncture strength}$$
$$(N) \times 5 \text{ (μm)} / \text{thickness } T_1 \text{ (μm)} \ldots (2).$$

(Air permeability)

The upper limit of the air permeability (Gurley value) of the polyolefin microporous membrane is not particularly limited, but the air permeability is, for example, 300 sec/100 cm$^3$ or less, preferably 200 sec/100 cm$^3$ or less, more preferably 180 sec/100 cm$^3$ or less, and even more preferably 150 sec/100 cm$^3$ or less. In terms of the lower limit of the air permeability, the air permeability is, for example, 10 sec/100 cm$^3$ or more, and preferably 50 sec/100 cm$^3$ or more. In a case where the air permeability falls within the above range, when the polyolefin microporous membrane is used as a separator for a secondary battery, ion permeability is excellent, and impedance decreases and battery output and rate characteristics are improved in the secondary battery including the separator. The air permeability can be controlled to fall within the above range by adjusting stretching conditions and the like in the production of the polyolefin microporous membrane.

The air permeability of the polyolefin microporous membrane is preferably 100 sec/100 cm$^3$/5 μm or more and 200 sec/100 cm$^3$/5 μm or less in terms of membrane thickness of 5 μm.

The air permeability of the microporous membrane having thickness $T_1$ (μm) is a value $P_1$ (sec/100 cm$^3$) which can be measured by an air permeability meter (EGO-1T manufactured by Asahi Seiko Co., Ltd.) in accordance with JIS P-8117. Air permeability $P_2$ (sec/100 cm$^3$/5 μm) in terms of membrane thickness of 5 μm is a value that can be determined by the following formula (3).

$$P_2 = P_1 \text{ (sec/100 cm}^3\text{)} \times 5 \text{ (μm)} / \text{membrane thickness } T_1 \text{ (μm)} \ldots (3).$$

(Average pore diameter)

The average pore diameter (average flow diameter) of the polyolefin microporous membrane is preferably 50 nm or less, more preferably 40 nm or less, and even more preferably 35 nm or less. The lower limit of the average pore diameter is not particularly limited, but is, for example, 10 nm because an increase in internal resistance of the secondary battery due to a decrease in permeability occurs. A separator having an average pore diameter in the above range is excellent in balance between strength and permeability, and self-discharge originating from coarse pores is prevented. The average pore diameter is a value measured by the method (half dry method) in accordance with ASTM E1294-89. A palm porometer (model number: CFP-1500A) manufactured by PMI Co. may be used as a measurement instrument, and Galwick (15.9 dyn/cm) may be used as a measurement liquid.

(Thickness)

The upper limit of the thickness of the polyolefin microporous membrane is not particularly limited, but the thickness is, for example, 16 $\mu$m or less, preferably 10 $\mu$m or less, and more preferably 7.5 $\mu$m or less. The lower limit of the membrane thickness is not particularly limited, but the thickness is, for example, 1 $\mu$m or more. When the thickness falls within the above range, battery capacity is improved when the polyolefin microporous membrane is used as a battery separator. When the thickness is 7.5 $\mu$m or less, the internal resistance is reduced, and rate characteristics of the secondary battery can be expected to be improved. The polyolefin microporous membrane of the present embodiment has the above haze value, puncture strength, and the like, and therefore, the polyolefin microporous membrane has good strength and excellent self-discharge characteristics even when the membrane is thinned.

(Porosity)

Porosity of the polyolefin microporous membrane is not particularly limited, but is, for example, 10% or more and 70% or less. When the polyolefin microporous membrane is used as a separator for a secondary battery, the polyolefin microporous membrane, in terms of the lower limit, is preferably 20% or more, more preferably 25% or more, and even more preferably 30% or more. The porosity, in terms of the lower limit, falls within the above range, and thus, a holding amount of an electrolytic solution is increased and high ion permeability can be achieved. The porosity can be controlled to fall within the above range by adjusting a composition, a stretching magnification, and the like of the polyolefin resin in the production process.

The porosity can be measured by the following formula (1) through the comparison between a weight $w_1$ of the microporous membrane and a weight $w_2$ of a polymer without pores equivalent thereto (a polymer having the same width, length, and composition).

$$\text{Porosity } (\%) = (w_2 - w_1)/w_2 \times 100 \ldots (1).$$

(Polyolefin resin)

The polyolefin microporous membrane contains a polyolefin resin as a main component. For example, polyethylene and polypropylene may be used as the polyolefin resin. The polyethylene is not particularly limited, and various polyethylenes may be used, and for example, high-density polyethylene, medium-density polyethylene, branched low-density polyethylene, linear low-density polyethylene or the like may be used. The polyethylene may be a homopolymer of ethylene, or may be a copolymer of ethylene and another $\alpha$-olefin. Examples of the $\alpha$-olefin include propylene, butene-1, hexene-1, pentene-1, 4-methylpentene-1, octene, vinyl acetate, methyl methacrylate, and styrene.

The polyolefin microporous membrane containing high-density polyethylene (density: 0.920 g/m$^3$ or more and 0.970 g/m$^3$ or less) is excellent in melt extrusion properties and in uniform stretching properties. Examples of the high-density polyethylene include those having a weight average molecular weight (Mw) of $1 \times 10^4$ or more and less than $1 \times 10^6$. Mw is a value measured by gel permeation chromatography (GPC). A content of the high-density polyethylene is, for example, 50 mass% or more based on 100 mass% of the entire polyolefin resin. In terms of the upper limit, the content of the high-density polyethylene is, for example, 100 mass% or less, and in a case of containing other components, the content is, for example, 90 mass% or less.

The polyolefin microporous membrane may contain ultra-high molecular weight polyethylene (UHMwPE). Examples of the ultra-high molecular weight polyethylene include those having a weight average molecular weight (Mw) of $1 \times 10^6$ or more (100,000 or more), preferably $1 \times 10^6$ or more and $8 \times 10^6$ or less. When Mw falls within the above range, formability is good. Mw is a value measured by gel permeation chromatography (GPC). The ultra-high molecular weight polyethylene may be used alone or in combination of two or more kinds thereof, and for example, a mixture of two or more kinds of the ultra-high molecular weight polyethylene having different Mw may be used.

The ultra-high molecular weight polyethylene may be contained, for example, in an amount of 0 mass% or more and 70 mass% or less based on 100 mass% of the entire polyolefin resin. For example, when the content of the ultra-high molecular weight polyethylene is 10 mass% or more and 60 mass% or less, Mw of the obtained polyolefin microporous membrane tends to be easily controlled in a specific range to be described below, and productivity such as extrusion kneadability tends to be excellent. Further, when the ultra-high molecular weight polyethylene is contained, a high mechanical strength can be obtained even when the polyolefin microporous membrane is thinned.

The polyolefin microporous membrane may contain polypropylene. The kind of polypropylene is not particularly limited and may be any of a homopolymer of propylene, a copolymer of propylene and another $\alpha$-olefin and/or diolefin (propylene copolymer), or a mixture thereof, and the homopolymer of propylene is preferably used in view of mechanical strength and miniaturization of a through-hole diameter. The content of polypropylene in the entire polyolefin resin is, for example, 0 mass% or more and 15 mass% or less, preferably 2.5 mass% or more and 15 mass% or less in view of heat resistance.

The polyolefin microporous membrane may contain other resin components other than polyethylene and polypropylene as necessary. For example, a heat resistant resin may be used as the other resin components. The polyolefin microporous membrane may contain various additives such as an antioxidant, a heat stabilizer, an antistatic agent, an ultraviolet absorber, an anti-blocking agent, a filler, a crystal nucleating agent, and a crystallization retardant as long as the effects of the present invention are not impaired.

In particular, when the polyolefin microporous membrane does not contain ultra-high molecular weight polyethylene, the polyolefin microporous membrane preferably contains a crystal nucleating agent. When the crystal nucleating agent is contained, high mechanical strength and a low haze value can be obtained. The polyolefin microporous membrane may also contain both the ultra-high molecular weight polyethylene and the crystalline nucleating agent. When both are contained, puncture strength can be improved, and the haze value can be reduced.

The crystal nucleating agent is not particularly limited, a common crystal nucleating agent used in a polyolefin resin may be used, and examples thereof include a compound-based crystal nucleating agent and a particulate-based crystal nucleating agent.

[Compound-based crystal nucleating agent]

Examples of the compound-based crystal nucleating agent include: cyclic hydrocarbon carboxylic acid metal salts such as sodium benzoate, 4-tertiary butyl aluminum benzoate, sodium adipate, and 2 sodium bicyclo [2.2.1] heptane-2,3-dicarboxylate; aliphatic carboxylic acid metal salts such as sodium laurate and zinc stearate; sodium bis(4-tert-butylphenyl) phosphate, sodium-2,2'-methylene bis(4,6-ditert-butylphenyl) phosphate, and lithium-2,2'-methylene bis(4,6-ditert-butylphenyl) phosphate, and compounds having an acetal skeleton such as dibenzylidene sorbitol, bis(methyl benzylidene) sorbitol and bis(dimethyl benzylidene) sorbitol. Among them, an aromatic phosphoric acid ester-based metal salt and an aliphatic metal salt are preferably used in view of improving the membrane strength.

[Particulate-based crystal nucleating agent]

Examples of the particulate-based crystal nucleating agent include silica, alumina and the like.

As a commercially available crystal nucleating agent, "GEL ALL D" (manufactured by New Japan Chemical Co., Ltd.), "ADEKA STAB" (manufactured by Adeka Corporation), "Hyperform" (manufactured by Milliken Chemical), "IRGACLEAR D" (manufactured by Chiba Specialty Chemicals Co., Ltd.), or the like may be used. As a polyethylene resin masterbatch in which the crystal nucleating agent has been blended, for example, "Rikemaster" (manufactured by Riken Vitamin Co., Ltd.) can be commercially obtained.

A blending amount of the crystal nucleating agent is not particularly limited, but in terms of the upper limit, the blending amount is preferably 10 parts by mass or less, and more preferably 5 parts by mass or less based on 100 parts by mass of the polyolefin resin. In terms of the lower limit, the blending amount of the crystal nucleating agent is preferably 0.01 part by mass or more, and more preferably 0.1 parts by mass or more, based on 100 parts by mass of the polyolefin resin. When the blending amount of the crystal nucleating agent falls within the above range, dispersibility of the crystal nucleating agent in the polyolefin resin is good, handling workability on a production process is good, and economic efficiency can be expected.

(Weight average molecular weight: Mw)

The weight average molecular weight (Mw) of the polyolefin microporous membrane is preferably, for example, $7 \times 10^5$ or more and less than $1 \times 10^6$. When Mw falls within this range, the formability, the mechanical strength, and the like are excellent. When the polyolefin microporous membrane does not contain the above-described crystal nucleating agent, in terms of the lower limit, Mw of the polyolefin microporous membrane is, for example, preferably $8\times10^5$ or more, more preferably more than $8.2\times10^5$, and even more preferably $8.5\times10^5$ or more. When the Mw falls within this range, even when the crystal nucleating agent is not added, and the polyolefin microporous membrane is stretched by a relatively high magnification in a process for producing the polyolefin microporous membrane, a uniform and fine pore structure can be formed. On the other hand, in terms of the upper limit, Mw of the polyolefin microporous membrane is, for example, preferably $2.5\times10^6$ or less, more preferably $2.0\times10^6$ or less, and still more preferably $1.5\times10^6$ or less. When the Mw exceeds the upper limit, it may be unsuitable for melt extrusion. Mw of the polyolefin microporous membrane is a value measured by gel permeation chromatography (GPC).

Mw of the polyolefin microporous membrane can be controlled to fall within the above range by appropriately adjusting a blending ratio of components of the polyolefin resin and conditions of melt kneading.

2. Method for producing polyolefin microporous membrane

The method for producing a polyolefin microporous membrane is not particularly limited as long as the polyolefin microporous membrane having the above properties is obtained, and a common method for producing a polyolefin microporous membrane may be used. Examples of the method for producing the polyolefin microporous membrane include a dry process membrane production method and a wet process membrane production method. As the method for producing the polyolefin microporous membrane of the present embodiment, the wet process membrane production method is preferable in view of easiness of controlling the structure and physical properties of the membrane. Methods described in descriptions of Japanese Patent No. 2132327 and Japanese Patent No. 3347835, WO 2006/137540 A1, and the like may be used as the wet process membrane production method.

The method for producing a polyolefin microporous membrane (wet process membrane production method) is described. The following description is an example of the production method, but the present invention is not limited to this method.

First, a resin solution is prepared by melt-kneading the polyolefin resin and the membrane forming solvent. Methods using a twin-screw extruder described in descriptions of Japanese Patent No. 2132327 and Japanese Patent No. 3347835 can be used as a melt-kneading method. Since the melt-kneading method is common, description thereof is omitted.

The polyolefin resin same as described above may be used. In addition, the resin solution may contain various additives such as an antioxidant, a heat stabilizer, an antistatic agent, an ultraviolet absorber, an anti-blocking agent, a filler, a crystal nucleating agent, and a crystallization retardant as long as the effects of the present invention are not impaired. The crystal nucleating agent same as described above may be used.

Next, the resin solution adjusted above is fed from an extruder to a die and extruded into a sheet shape, and an obtained extrusion molded body is cooled to form a gel sheet. A plurality of polyolefin resin compositions having the same or different compositions may be fed from a plurality of extruders to a single die, stacked into a layer shape, and extruded into a sheet shape. The methods disclosed in Japanese Patent No. 2132327 and Japanese Patent No. 3347835 may be used as a method for forming a gel sheet.

Then, the gel sheet is stretched in at least a uniaxial direction. Stretching of the gel sheet (first stretching) also refers to wet stretching. Stretching may be uniaxial stretching or biaxial stretching, but biaxial stretching is preferable. In the case of biaxial stretching, simultaneous biaxial stretching, sequential stretching, or multi-stage stretching (for example, a combination of simultaneous biaxial stretching and sequential stretching) may be used.

The final area stretching magnification in the wet stretching is, for example, preferably 3 times or more, and more preferably 4 times or more and 30 times or less in the case of uniaxial stretching. In the case of biaxial stretching, the area stretching magnification is preferably 9 times or more, more preferably 16 times or more, and further preferably 25 times or more. In terms of the upper limit, the area stretching magnification is preferably 100 times or less, and more preferably 64 times or less. In addition, a stretching magnification of 3 or more is preferable in both an MD direction (machine direction: longitudinal direction) and a TD direction (width direction: transverse direction), and the stretching magnifications in the MD direction and the TD direction may be same as or different from one another. When the stretching magnification is 5 times or more, an enhancement in the puncture strength can be expected. The stretching magnification in this step refers to a stretching magnification of a gel sheet immediately before being supplied to the next step based on a gel sheet immediately before this step. The TD direction is a direction orthogonal to the MD direction when the microporous membrane is seen in a plane.

The stretching temperature is preferably set within the range of from the crystalline dispersion temperature (Tcd) of the polyolefin resin to Tcd + 30°C, more preferably within the range of from the crystalline dispersion temperature (Tcd) + 5°C to the crystalline dispersion temperature (Tcd) + 28°C, and particularly preferably within the range of from Tcd + 10°C to Tcd + 26°C. When the stretching temperature falls within the range described above, membrane puncture due to the stretching of the polyolefin resin is prevented, and stretching at a high stretching magnification can be performed.

The crystalline dispersion temperature (Tcd) is a value determined by temperature characteristic measurement of the dynamic viscoelasticity based on ASTM D4065. The ultra-high molecular weight, polyethylene other than the ultra-high molecular weight polyethylene, and polyethylene compositions have a crystalline dispersion temperature of about 90°C to 100°C. The stretching temperature can be set to, for example, 90°C or more and 130°C or less.

Next, the membrane forming solvent is removed from the gel sheet after the stretching to form a microporous membrane. The solvent for membrane formation is removed (washed) using a washing solvent. The polyolefin phase is phase-separated from the phase of the membrane forming solvent, and thus, when the membrane forming solvent is removed, a porous membrane including fibrils forming a fine three-dimensional network structure and having pores (voids) which are communicated three-dimensionally and irregularly is obtained. Washing solvents and methods of removing the membrane forming solvent using the washing solvent are common, and thus, description thereof is omitted. For example, the methods disclosed in description of Japanese Patent No. 2132327 or JP 2002-256099 A may be used.

The microporous membrane from which the membrane forming solvent has been removed is dried by heat-drying or air-drying. The drying temperature is preferably not higher than the crystalline dispersion temperature (Tcd) of the polyolefin resin, and is particularly preferably lower than the Tcd by at least 5°C. Drying is preferably performed until a residual washing solvent is 5 mass% or less, and more preferably performed until a residual washing solvent is 3 mass% or less, when a microporous membrane film is taken as 100 mass% (dry weight). When the residual washing solvent falls within the above range, the porosity of the polyolefin microporous membrane is maintained and deterioration of the permeability is prevented, when the stretching step and heat treatment step of the microporous membrane film in the subsequent stage are performed.

Next, the microporous membrane after being dried is stretched at a predetermined area stretching magnification in at least uniaxial direction. Stretching of the film after drying (second stretching) also refers to dry stretching. Stretching may be uniaxial stretching or biaxial stretching. In the case of biaxial stretching, simultaneous biaxial stretching or sequential stretching may be performed, but sequential stretching is preferable. In a case of sequential stretching, after stretching in the MD direction, stretching in the TD direction is preferably performed.

An area magnification (area stretching magnification) of the dry stretching is preferably 1.2 times or more, more preferably 1.2 times or more and 9.0 times or less. By setting the area magnification within the above range, the puncture strength and the like can be easily controlled within a desired range. In a case of uniaxial stretching, the stretching magnification in the MD direction or the TD direction is set to, for example, 1.2 times or more, preferably 1.2 times or more and 3.0 times or less. In a case of biaxial stretching, the stretching magnifications in the MD direction and the TD direction are set to 1.0 time or more and 3.0 times or less, respectively, and the stretching magnifications in the MD direction and the TD direction may be the same as or different from each other in the MD and TD directions, but the stretching magnifications in the MD direction and the TD direction are preferably substantially the same. The dry stretching is preferably performed (third stretching) at a stretching magnification of more than 1 time and 3 times or less in the TD direction successively after stretching (second stretching) at a stretching magnification of more than 1 time and 3 times or less in the MD direction. The stretching magnification in this step refers to a stretching magnification of the microporous membrane immediately before being supplied to the next step based on microporous membrane (film) immediately before this step.

The stretching temperature in this step is not particularly limited but is typically 90°C to 135°C, and more preferably 95°C to 133°C.

In a case where the second stretching is performed by roll stretching, multi-stage stretching is preferable. In a case of high magnification stretching, a stretching point is not determined due to the occurrence of slide on the roll, and stretching unevenness is easy to occur, but the stretching unevenness can be reduced by increasing the number of stretching stages. In particular, when the stretching magnification is 1.5 times or more, stretching with 4 stages or more is preferable, and stretching with 5 stages or more is more preferable.

In addition, the microporous membrane after drying may be heat-treated. Heat setting treatment and/or heat relaxation treatment may be used as the heat treatment method. The heat setting treatment is a heat treatment that heats in a manner that the dimension of a membrane in the TD is maintained and not changed. The heat relaxation treatment is a treatment in which the membrane is thermally shrunk in the MD and/or TD during the heating. Heat setting treatment is preferably performed by a tenter method or a roll method. For example, a method disclosed in JP 2002-256099 A may be exemplified as the heat relaxation treatment method. The heat treatment temperature is preferably within the range of from Tcd to Tm of the polyolefin resin, more preferably within the range of ±5°C of the second stretching temperature of the microporous membrane, and particularly preferably within the range of ±3°C of the second stretching temperature of the microporous membrane.

Further, a crosslinking treatment and a hydrophilization treatment may also be performed. For example, the microporous membrane is subjected to crosslinking treatment by irradiating with ionizing radiation such as α rays, β rays, γ rays, and electron rays. In a case of electron ray irradiation, an amount of electron rays of 0.1 Mrad to 100 Mrad is preferable, and an acceleration voltage of 100 kV to 300 kV is preferable. By the crosslinking treatment, a meltdown temperature of the microporous membrane rises. The hydrophilization treatment may be performed by a monomer graft, a surfactant treatment, corona discharge, or the like. The monomer graft is preferably performed after the crosslinking treatment.

The polyolefin microporous membrane may be a single layer, but a layer including the polyolefin microporous membrane may be stacked. A multilayer polyolefin microporous membrane can be a layer of two or more layers. In a case of the multilayer polyolefin microporous membrane, a composition of the polyolefin resin constituting each layer may be the same composition or different compositions.

The polyolefin microporous membrane may be a laminated polyolefin porous membrane formed by laminating another porous layer other than the polyolefin resin. Another porous layer is not particularly limited, but for example, a coating layer such as an inorganic particle layer containing a binder and inorganic particles may be laminated. Binder components constituting the inorganic particle layer are not particularly limited, common components may be used, and examples thereof include an acrylic resin, a polyvinylidene fluoride resin, a polyamide-imide resin, a polyamide resin, an aromatic polyamide resin, and a polyimide resin. The inorganic particles constituting the inorganic particle layer are not particularly limited, common materials may be used, and examples thereof include alumina, boehmite, barium sulfate, magnesium oxide, magnesium hydroxide, magnesium carbonate, and silicon. In addition, as the laminated polyolefin porous membrane, the porous binder resin may be laminated on at least one surface of the polyolefin microporous membrane.

EXAMPLES

Hereinafter, the present invention is described in more detail with reference to Examples. However, the present invention is not limited to these examples.

1. Measurement method and evaluation method

[Thickness]

The thickness at five points of the microporous membrane within a range of 95 mm × 95 mm was measured with a contact thickness meter (Litematic, manufactured by Mitutoyo Corporation), and an average value thereof was determined.

[Haze]

In accordance with JIS K 7136: 2000, a test piece of 3 cm × 3 cm was cut separately from three places of the microporous membrane which were positioned at the center of the film width direction (TD direction) and randomly extracted parts in the MD direction. They were measured for haze using a haze meter NDH5000 (manufactured by Nippon Denko Kogyo Co. Ltd., light source: white LED) to determine an average value thereof.

Further, a haze at 400 nm (haze (400 nm)) was measured using an ultraviolet visible light spectrophotometer (UV-2450 manufactured by Shimadzu Corporation) to which an integrating sphere unit (IR-2200 integrating sphere unit manufactured by Shimadzu Corporation) was attached.

[Porosity]

The porosity was determined using the following equation, in which the weight $w_1$ of the microporous membrane and the weight $w_2$ of an equivalent polymer having no pores (polymer having the same width, length, and composition) were compared.

$$\text{Porosity } (\%) = (w_2 - w_1)/w_2 \times 100$$

[Average pore diameter]

The measurements were performed in the order of Dry-up and Wet-up using a perm porometer (CFP-1500A, manufactured by PMI). The average pore diameter (average flow diameter) was converted from pressure at an intersected point between a curve showing a gradient of 1/2 of that of a pressure and flow curve measured by Dry-up and a curve measured by Wet-up. The following formula was used for conversion of pressure and pore diameter.

$$d = C \cdot \gamma / P$$

In the above formula, "d ($\mu$m)" is a pore diameter of a microporous membrane, "$\gamma$ (mN/m)" is a surface tension of liquid, "P (Pa)" is a pressure, and "C" is a constant.

[Puncture strength]

A maximum load $L_1$ (N) was measured when the microporous membrane having thickness $T_1$ ($\mu$m) was punctured at a rate of 2 mm/sec with a needle having a diameter of 1 mm with a spherical tip (radius of curvature R: 0.5 mm). Further, a maximum load $L_2$ (in terms of 5 $\mu$m) (N/5 $\mu$m) when the thickness was 5 $\mu$m was calculated by the formula: $L_2 = (L_1 \times 5)/T_1$ using the measured value of the maximum load $L_1$.

[Air Permeability (Air Permeability Resistance; Gurley value)]

Air permeability $P_1$ (sec/100 cm$^3$) of the microporous membrane having thickness $T_1$ ($\mu$m) was measured with an air permeability meter (EGO-1T manufactured by Asahi Seiko Co., Ltd.) in accordance with JIS P-8117. Further, air permeability $P_2$ (in terms of 5 $\mu$m) (sec/100 cm$^3$/5 $\mu$m) when the thickness was 20 $\mu$m was calculated by the formula: $P_2 = (P_1 \times 16)/T_1$.

[Weight Average Molecular Weight (Mw)]

The weight average molecular weight (Mw) of the obtained polyolefin microporous membrane was determined by gel permeation chromatography (GPC) under the following conditions.

- Measurement instrument: GPC-150C, manufactured by Waters Corporation
- Column: Shodex UT806M, manufactured by Showa Denko, K. K.
- Column temperature: 135°C
- Solvent (mobile phase): o-dichlorobenzene
- Solvent flow rate: 1.0 mL/min
- Sample concentration: 0.1 wt% (dissolution condition: 135°C/1 h)
- Injection quantity: 500 $\mu$L
- Detector: differential refractometer (RI detector) manufactured by Waters Corporation
- Calibration curve: created using polyethylene conversion constant (0.468) from calibration curve obtained using monodisperse polystyrene standard sample.

[Self-discharge characteristics]

A method for producing a secondary battery for evaluation of self-discharge characteristics is described below.

(Production of positive electrode)

A lithium cobalt composite oxide LiCoO$_2$ as a positive electrode active substance, acetylene black as a conductive material, and polyvinylidene fluoride (PVDF) as a binder were mixed at a mass ratio of 93.5: 4.0: 2.5, and the mixture was mixed and dispersed in a solvent N-methylpyrrolidone (NMP) to prepare a slurry. The slurry was applied to both surfaces of an aluminum foil having a thickness of 12 $\mu$m serving as a positive electrode current collector and dried, and then the aluminum foil was rolled with a roll press machine. The rolled aluminum foil was slit to a width of 30 mm to prepare a positive electrode.

(Production of negative electrode)

Artificial graphite as a negative electrode active substance, carboxymethyl cellulose as a binder, and styrene-butadiene copolymer latex in a mass ratio of 98: 1: 1 were mixed and dispersed in purified water to prepare a slurry. The slurry was applied to both surfaces of a copper foil having a thickness of 10 $\mu$m serving as a negative electrode current collector and dried, and then the copper foil was rolled with a roll press machine. The rolled copper foil was slit to a width of 33 mm to form a negative electrode.

(Non-aqueous electrolyte)

LiPF6 as a solute was dissolved in a mixed solvent of ethylene carbonate: ethyl methyl carbonate: dimethyl carbonate = 3: 5: 2 (volume ratio) to have a concentration of 1.15 mol/L. Further, 0.5 mass% of vinylene carbonate was added to 100 mass% of a non-aqueous electrolyte to prepare the non-aqueous electrolyte.

(Production of battery)

The positive electrode, the polyolefin microporous membrane of the present embodiment, and the negative electrode were stacked, and then a flat wound electrode body (height 2.2 mm × width 36 mm × depth 29 mm) was produced. A tab with a sealant was welded to each electrode of the flat wound electrode body to form a positive electrode lead and a negative electrode lead. The flat wound electrode body was partially sandwiched by an aluminum laminated film, followed by sealing with leaving some opening portions, drying in a vacuum oven at 80°C over 6 hours, and then 0.7 ml of electrolyte was injected quickly, followed by sealing with a vacuum sealer, and press molding at 80°C and 1 MPa over 1 hour. Subsequently, charging and discharging were performed. Under the charging and discharging conditions, constant current charging was performed at a current value of 300 mA until a battery voltage achieved 4.2 V, and then, constant voltage charging was performed at a battery voltage of 4.2 V until a current value achieved 15 mA. After a pause of 10 minutes, the constant current discharging was performed at a current value of 300 mA until a battery voltage achieved 3.0 V, and was paused for 10 minutes. Three cycles of the above charging and discharging were performed to produce a secondary battery for test having a battery capacity of 300 mAh.

(Evaluation of voltage drop amount)

An assembled secondary battery for test was constant-current charged at a current value of 0.5 C until a battery voltage achieved 3.85 V, and then, constant-voltage charged at a current voltage of 3.85 V until a current value achieved 0.05 C. An open circuit voltage after leaving the battery alone for 24 hours was measured, and the value was defined as $V_1$. The battery was left alone for additional 24 hours, that is, left alone for 48 hours in total after charging, then the open circuit voltage was measured, and the value was defined as $V_2$. The voltage drop amount was calculated from the obtained values of $V_1$ and $V_2$ based on the following formula.

$$\text{Voltage drop amount} = (V_1 - V_2)/24$$

○: When the voltage drop amount was less than 0.06 mV/hr, the self-discharge characteristics were good and evaluated as "○".
×: When the voltage drop amount was 0.06 mV/hr or more, the self-discharge characteristics were poor and evaluated as "×".

(Examples 1 to 4)

25 parts by mass of ultra-high molecular weight polyethylene (UHMwPE) having Mw of $2.0×10^6$ and high-density polyethylene (HDPE) having Mw of $6.0×10^5$ as a polyolefin resin in a blending ratio shown in Table 1 and 75 parts by mass of liquid paraffin, and tetrakis [methylene-3-(3,5-ditertiary-butyl-4-hydroxyphenyl)-propionate] methane (0.2 parts by mass per 100 parts by mass of the polyolefin resin) as an antioxidant were melt-kneaded using a twin-screw extruder to prepare a polyolefin solution. The polyolefin solution was supplied from the twin-screw extruder to a T die and extruded. The extrusion molded body was cooled while being taken by a cooling roll to form a gel sheet. The gel sheet was subjected to wet stretching at 110°C in both the MD direction and the TD direction at a stretching magnification of 5 times using a simultaneous biaxial tenter stretching machine. The liquid paraffin was removed from the wet stretched gel sheet using methylene chloride, followed by air drying at room temperature to obtain a microporous membrane. The obtained microporous membrane was subjected to dry stretching in the MD direction and then the TD direction at a stretching magnification shown in Table 1 at 126°C using a batch type stretching machine. Next, the membrane was subjected to a heat relaxation treatment while shrinking 8% in the TD direction at 126°C by a tenter method. Evaluation results and the like of the obtained polyolefin microporous membrane were described in Table 1.

[Example 5]

A polyolefin microporous membrane was prepared in the same manner as in Example 1, except that a polyolefin solution was prepared using a polyolefin resin in a blending ratio shown in Table 1, and further using 0.2 parts by mass of ADEKA STAB NA-11 as a crystal nucleating agent per 100 parts by mass of the polyolefin resin, and a dry stretching magnification was changed to a stretching magnification described in Table 1. Evaluation results of the obtained polyolefin microporous membrane were described in Table 1.

[Example 6]

A polyolefin microporous membrane was prepared in the same manner as in Example 5, except that a polyolefin solution was prepared using 0.2 parts by mass of ADEKA STAB NA-27 as a crystal nucleating agent per 100 parts by mass of the polyolefin resin. Evaluation results of the obtained polyolefin microporous membrane were described in Table 1.

[Comparative Example 1]

A polyolefin microporous membrane was obtained in the same manner as in Example 1 except that a polyolefin resin and liquid paraffin were used in a blending ratio shown in Table 1, and wet stretching was performed by the simultaneous biaxial stretching at a stretching magnification of 7 times in both the MD direction and the TD direction, and dry stretching was not performed. Evaluation results of the obtained polyolefin microporous membrane were described in Table 1.

[Comparative Example 2]

A polyolefin microporous membrane was prepared in the same manner as in Example 1 except that the polyolefin resin was used in a blending ratio shown in Table 1. Evaluation results and the like of the obtained polyolefin microporous membrane were described in Table 1.

[Comparative Example 3]

A polyolefin microporous membrane was prepared in the same manner as in Example 2 except that dry stretching was not performed. Evaluation results and the like of the obtained polyolefin microporous membrane were described in Table 1.

[Comparative Example 4]

A polyolefin microporous membrane was prepared in the same manner as in Example 1 except that a polyolefin solution was prepared at a resin concentration shown in Table 1, and dry stretching was performed at a stretching magnification shown in Table 1. Evaluation results and the like of the obtained polyolefin microporous membrane were described in Table 1.

[Comparative Example 5]

A polyolefin microporous membrane was prepared in the same manner as in Comparative Example 3 except that the polyolefin resin was used in a blending ratio shown in Table 1, and the thickness was 16 $\mu$m. Evaluation results and the like of the obtained polyolefin microporous membrane were described in Table 1.

[Comparative Example 6]

A polyolefin microporous membrane was prepared in the same manner as in Comparative Example 5 except that dry stretching was performed at a stretching magnification shown in Table 1, and the thickness was 5 $\mu$m. Evaluation results and the like of the obtained polyolefin microporous membrane were described in Table 1.

Table 1

| | | | Example 1 | Example 2 | Example 3 | Example 4 | Example 5 | Example 6 |
|---|---|---|---|---|---|---|---|---|
| HDPE | mass% | | 70 | 60 | 60 | 60 | 100 | 100 |
| | Mw | | $6.0\times10^5$ | $6.0\times10^5$ | $6.0\times10^5$ | $6.0\times10^5$ | $6.0\times10^5$ | $6.0\times10^5$ |
| UHMwPE | mass% | | 30 | 40 | 40 | 40 | 0 | 0 |
| | Mw | | $2.0\times10^6$ | $2.0\times10^6$ | $2.0\times10^6$ | $2.0\times10^6$ | $2.0\times10^6$ | $2.0\times10^6$ |
| Resin concentration | part by mass | | 25 | 25 | 25 | 25 | 25 | 25 |
| Microporous membrane Mw | - | | $8.6\times10^5$ | $1.1\times10^6$ | $1.2\times10^6$ | $1.2\times10^6$ | $5.8\times10^5$ | $5.8\times10^5$ |
| Dry stretching magnification | (MD) time | | 1.4 | 1.6 | 1.6 | 1.4 | 1.4 | 1.4 |
| | (TD) time | | 1.5 | 1.7 | 1.7 | 1.5 | 1.4 | 1.5 |
| Thickness | μm | | 5 | 7 | 5 | 5 | 5 | 5 |
| Haze (400 nm) | % | | 96 | 97 | 96 | 97 | 97 | 97 |
| Haze (JIS) | % | | 88 | 89 | 84 | 88 | 87 | 89 |
| Average pore diameter | nm | | 35 | 36 | 35 | 32 | 35 | 37 |
| Porosity | % | | 34 | 40 | 39 | 34 | 35 | 34 |
| Puncture strength | N | | 2.55 | 2.55 | 2.75 | 2.85 | 2.55 | 2.55 |
| Air permeability | sec/100 cm$^3$ | | 150 | 180 | 100 | 150 | 150 | 150 |
| Self-discharge characteristics | - | | ○ | ○ | ○ | ○ | ○ | ○ |

Table 1 continued

| | | | Comparative Example 1 | Comparative Example 2 | Comparative Example 3 | Comparative Example 4 | Comparative Example 5 | Comparative Example 6 |
|---|---|---|---|---|---|---|---|---|
| HDPE | mass% | | 90 | 95 | 60 | 70 | 82 | 82 |
| | Mw | | $6.0\times10^5$ | $6.0\times10^5$ | $6.0\times10^5$ | $6.0\times10^5$ | $6.0\times10^5$ | $3.0\times10^5$ |
| UHMwPE | mass% | | 10 | 5 | 40 | 30 | 18 | 18 |
| | Mw | | $2.0\times10^6$ | $2.0\times10^6$ | $2.0\times10^6$ | $2.0\times10^6$ | $2.0\times10^6$ | $2.0\times10^6$ |
| Resin concentration | part by mass | | 30 | 25 | 25 | 30 | 25 | 25 |
| Microporous membrane Mw | - | | $8.2\times10^5$ | $7.3\times10^5$ | $1.0\times10^6$ | $8.5\times10^5$ | $7.6\times10^5$ | $7.6\times10^5$ |
| Dry stretching magnification | (MD) time | | 1 | 1.4 | 1 | 1 | 1 | 1 |
| | (TD) time | | 1 | 1.5 | 1 | 1.1 | 1 | 1.3 |
| Thickness | μm | | 5 | 5 | 5 | 5 | 16 | 5 |
| Haze (400 nm) | % | | 97 | 97 | 97 | 97 | 98 | 97 |
| Haze (JIS) | % | | 94 | 96 | 94 | 95 | 97 | 93 |
| Average pore diameter | nm | | 37 | 37 | 36 | 32 | 30 | 37 |
| Porosity | % | | 34 | 36 | 33 | 32 | 37 | 32 |
| Puncture strength | N | | 2.45 | 2.26 | 1.9 | 2.3 | 3.21 | 2.16 |
| Air permeability | sec/100 cm$^3$ | | 140 | 150 | 180 | 180 | 280 | 140 |
| Self-discharge characteristics | - | | × | × | × | × | ○ | × |

(Evaluation)

It was shown that the polyolefin microporous membrane having a thickness of 5 μm to 7 μm in Examples had a haze value (JIS K 7136) of 90% or less, puncture strength of 1.96 N or more, and excellent self-discharge characteristics.

On the other hand, for the polyolefin microporous membrane (commercially available product) of Comparative Example 1, although puncture strength and air permeability were in the same level with those of the polyolefin microporous membrane of Examples, a haze value was more than 90%, and self-discharge characteristics were poor. For the polyolefin microporous membrane of Comparative Example 2, the ultra-high molecular weight polyethylene and the crystal nucleating agent were not added, and the haze value was more than 90% and the self-discharge characteristics were poor. Further, for the polyolefin microporous membrane of Comparative Example 3, although a dry stretching magnification was 1 time and a haze value was 90% or less, the puncture strength was low and self-discharge characteristics were poor.

From the above, it was revealed that the secondary battery in which the polyolefin microporous membrane having the haze value and the puncture strength in specific ranges was incorporated as a separator had excellent self-discharge characteristics.

INDUSTRIAL APPLICABILITY

The polyolefin microporous membrane of the present invention has excellent self-discharge characteristics when incorporated into a secondary battery as a separator. Therefore, the polyolefin microporous membrane can be suitably used as a separator for a secondary battery which requires thinning. The method for producing a polyolefin microporous membrane of the present invention is easy and suitable for production in an industrial scale.

**Claims**

1. A polyolefin microporous membrane, having a haze value measured in accordance with JIS K 7136 being 90% or less and puncture strength of 1.96 N or more.

2. The polyolefin microporous membrane according to claim 1, having air permeability of 50 sec/100 cm$^3$ or more and 300 sec/100 cm$^3$ or less.

3. The polyolefin microporous membrane according to claim 1 or 2, comprising 50 weight% or more of a high-density polyethylene.

4. The polyolefin microporous membrane according to any one of claims 1 to 3, having a weight average molecular weight of 800,000 or more.

5. The polyolefin microporous membrane according to any one of claims 1 to 4, having a thickness of 1 $\mu$m or more and 20 $\mu$m or less.

6. A multilayer polyolefin microporous membrane, comprising at least one layer of the polyolefin microporous membrane according to any one of claims 1 to 5.

7. A laminated polyolefin microporous membrane, comprising the polyolefin microporous membrane according to any one of claims 1 to 5 and one or more coating layers on at least one surface of the polyolefin microporous membrane.

8. A battery, comprising a separator containing the polyolefin microporous membrane according to any one of claims 1 to 5.

## INTERNATIONAL SEARCH REPORT

| | International application No. |
|---|---|
| | PCT/JP2018/008332 |

### A. CLASSIFICATION OF SUBJECT MATTER
Int.Cl. C08J9/28(2006.01)i, B32B5/18(2006.01)i, B32B27/32(2006.01)i, C08L23/02(2006.01)i, H01M2/16(2006.01)i

According to International Patent Classification (IPC) or to both national classification and IPC

### B. FIELDS SEARCHED

Minimum documentation searched (classification system followed by classification symbols)
Int.Cl. C08J9/28, B32B5/18, B32B27/32, C08L23/02, H01M2/16

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
JDreamIII

### C. DOCUMENTS CONSIDERED TO BE RELEVANT

| Category* | Citation of document, with indication, where appropriate, of the relevant passages | Relevant to claim No. |
|---|---|---|
| X | JP 2013-514389 A (TORAY BATTERY SEPARATOR FILM CO., LTD.) 25 April 2013, paragraphs [0018]-[0138] & US 2012/0282514 A1 & WO 2011/074696 A1, paragraphs [0018]-[0131] & CN 102725054 A & KR 10-2012-0107118 A | 1-8 |
| X | WO 2016/194962 A1 (TORAY INDUSTRIES) 08 December 2016, paragraphs [0018]-[0085], tables 1-3 (Family: none) | 1-8 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14.05.2018 | 22.05.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 594 279 A1**

**INTERNATIONAL SEARCH REPORT**

International application No.

PCT/JP2018/008332

C (Continuation). DOCUMENTS CONSIDERED TO BE RELEVANT

| Category* | Citation of document, with indication, where appropriate, of the relevant passages | Relevant to claim No. |
|---|---|---|
| X | JP 2013-166804 A (TORAY BATTERY SEPARATOR FILM CO., LTD.) 29 August 2013, paragraphs [0015]-[0093] & WO 2011/152201 A1 & CN 102869710 A & KR 10-2013-0087367 A | 1-8 |

Form PCT/ISA/210 (continuation of second sheet) (January 2015)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014162851 A
- WO 2006137535 A1
- JP 2003253026 A
- JP 2132327 A
- JP 3347835 B
- WO 2006137540 A1
- JP 2002256099 A